# EUROPEAN PATENT SPECIFICATION

(11) **EP 4 471 312 B1**
(45) Date of publication and mention of the grant of the patent: **14.01.2026**
(21) Application number: 23177124.7
(22) Date of filing: 02.06.2023
(51) Int. Cl.: F16L 9/147, F16L 57/06, F16L 58/10

(54) **METAL PIPE WITH A PLASTIC COATING**
METALLROHR MIT EINER KUNSTSTOFFBESCHICHTUNG
TUYAU MÉTALLIQUE AVEC REVÊTEMENT EN MATIÈRE PLASTIQUE

(43) Date of publication of application: 04.12.2024
(73) Proprietor: TDC International AG, 6004 Luzern (CH)
(72) Inventor: WELKER, Daniel, 6004 LUZERN (CH)
(74) Representative: Eisenführ Speiser

(56) References cited:
- WO-A1-01/05580
- WO-A1-2009/073716
- WO-A1-2020/002660
- DE-A1- 102015 204 926

## Description

According to one aspect, the invention relates to a metal pipe with a plastic sheath, in particular with a thermoplastic sheath and a fibre-reinforced protective sheath enclosing the thermoplastic sheath.

It is known to provide buried steel pipes for the transport of liquid or gaseous media with a relatively thin coating of plastic, preferably polypropylene, polyethylene, fusion-bonded epoxy (FBE) or polyurethane, for example to prevent corrosion of the metallic pipe material. Such layers of polypropylene, polyethylene, FBE or polyurethane ensure excellent corrosion protection on the one hand, as the earth moisture and/or other electrolytes cannot come into contact with the metallic pipe material. On the other hand, layers of polypropylene, polyethylene, FBE or polyurethane have only a relatively low mechanical strength. To protect the polypropylene, polyethylene, FBE or polyurethane coating from undesired mechanical abrasion and impacts, it is known to additionally provide the pipe with a fibre cement coating or a fibre reinforced plastic (GRP) coating, in particular a glass-fibre reinforced plastic (fibreglass) coating.

Metal pipes with a glass-fibre reinforced plastic coating are inter alia disclosed in WO 01/05580, DE 10 2015 204926 A1 A1and WO 2020/002660 A1. The glass-fibre reinforced plastic coating protects the pipe during trenchless pipe-laying. For the open trench pipe-laying pipes with both plastic coating and an additional fiber cement mortar top coating are used.

Metal pipes with a glass-fibre reinforced plastic coating are also used for open-trench pipe-laying.

With respect to open-trench pipe-laying, the inventors recognized that bending of pipes during pipe-laying can affect the glass-fibre reinforced plastic coating, in particular the mechanical properties of the glass-fibre reinforced plastic coating.

It is an object of the invention to provide a solution that avoids negative effects of bending during pipe-laying.

According to the invention, the object is achieved by means of a metal pipe covered by a a thermoplastic sheath and a fibre-reinforced protective sheath enclosing the thermoplastic sheath. The fibre-reinforced protective sheath comprises reinforcing fibers embedded in a thermoset plastic material. At least in longitudinal sections - herein after called compressive-force-relief sections - of the pipe, the fibre-reinforced protective sheath comprises at least two (i.e. two or more) layers of fibre reinforced plastic that are separated by an intermediate layer radially disposed between the two layers of fibre reinforced plastic. Each of the at least two layers of fibre reinforced plastic may comprise one or more layers of reinforcing fibers. The intermediate layer is made of a material that prevents chemical bonding between the at least two layers of fibre reinforced plastic and thus allows a sliding movement between the two layers of fibre reinforced plastic during bending.

In an alternative embodiment, no intermediate layer is provided. Instead, the fibre-reinforced protective sheath is configured to exhibit weakened sections that are configured to crack during bending to thus cause a controlled compression force relief.

A plastic covered metal pipe can have one or more compressive-force-relief sections.

The intermediate layer has an effect similar to a release agent and prevents the thermoset plastic material of the two layers of fibre reinforced plastic from sticking to the intermediate layer.

In a preferred embodiment, the intermediate layer is made from a plastic foil, preferably from a plastic foil containing polyolefin, Polytetrafluoroethylene, Polyamid (for instance Nylon) Polyethylene Terephthalate (PET), Polymethylpentene (PMP), Polyvinyl fluoride (PVF), Fluorinated ethylene propylene (FEP), Polytetrafluoroethylene (PTFE), Ethylene tetrafluoroethylene (ETFE), Polyimide or the like. Alternatively, the intermediate layer can be any separating agent, for instance wax that can be applied to the inner layer in order to prevent bonding with the outer layer.

The intermediate layer has the effect to promote compression force relief either by allowing a sliding movement between an inner and an outer layer of the two layers of fibre reinforced plastic or by promoting relief cracks at dedicated location of the plastic covered metal pipe assembly.

According to a preferred embodiment, an inner layer of the two or more layers of fibre reinforced plastic is embedded in the thermoplastic sheath enclosing the metal pipe. The thermoplastic sheath preferably comprises longitudinal sections with reduced thickness compared to the nominal maximum thickness of the thermoplastic sheath, thus providing annular grooves in the thermoplastic sheath that are filled with the inner layer of the two layers of fibre reinforced plastic and covered by the debonding intermediate layer.

The outer layer of the two or more layers of fibre reinforced plastic completely encloses and protects the thermoplastic sheath in those longitudinal sections where the thermoplastic sheath has its nominal maximum thickness and partly covers the inner layer of the two or more layers of fibre reinforced plastic in each compressive-force-relief section. An annular gap between two longitudinal sections of the outer layer of the two layers of fibre reinforced plastic is located in the compressive-force-relief section. The annular gap has an extension in the longitudinal direction of the pipe (i.e. a gap length L_{g}) that is shorter than an extension of the inner layer of the two or more layers of fibre reinforced plastic (i.e. an inner layer length Lᵢ). In other words, the gap between two longitudinal sections of the outer layer of the two layers of fibre reinforced plastic has a gap length L_{g} that is shorter than the inner layer length Lᵢ of inner layer of the two layers of fibre reinforced plastic in the longitudinal direction of the pipe. For instance, the inner layer length Lᵢ may be between three to twenty times longer than the gap length L_{g}.

The gap is arranged so as to provide an overlap between the outer layer of the two or more layers of fibre reinforced plastic and the inner layer of the two layers of fibre reinforced plastic at both longitudinal end sections of the inner layer of the two layers of fibre reinforced plastic.

The length of a longitudinal section of the outer layer of the two layers of fibre reinforced plastic (i.e. the outer layer length Lₒ) is at least ten to hundred times longer than the inner layer length Lᵢ.

The length of the intermediate layer is at least as long as the inner layer length Lᵢ and preferably is longer than the inner layer length Lᵢ so as to allow an overlap with the plastic sheath outside the groove in the plastic sheath in the longitudinal direction of the pipe.

The annular gap between two longitudinal sections of the outer layer of the two layers of fibre reinforced plastic exhibits the intermediate layer covering the inner layer of the two layers of fibre reinforced plastic.

The outer layer of the two layers of fibre reinforced plastic preferably is directly applied to the plastic sheath and the intermediate layer, respectively.

The intermediate layer preferably prevents the transmission of shearing and/or compressive forces between two layers of fibre reinforced plastic that would exceed the tensile strength of the thermoset plastic material of the two layers of fibre reinforced plastic.

An alternative plastic covered protected metal pipe assembly comprising a metal pipe that is covered by a plastic sheath, in particular with a thermoplastic sheath and a fibre-reinforced protective sheath enclosing the thermoplastic sheath, wherein the fibre-reinforced protective sheath comprises reinforcing fibers embedded in a thermo-set plastic material, may comprise at least one longitudinal section wherein the fibre-reinforced protective sheath is weakened to allow controlled cracking in response to compressive forces.

Such fibre-reinforced protective sheath may further comprise at least two layers of fibre reinforced plastic that are separated by an intermediate layer radially disposed between the two layers of fibre reinforced plastic, said intermediate layer being made of a material that prevents chemical bonding between the two layers of fibre reinforced plastic.

Further details of the invention shall now be described by way of example with respect to the attached drawing.
- Fig. 1: of the drawing is a longitudinal cross-sectional view of a first embodiment of plastic cover protected pipe assembly in a compressive-force-relief section of said pipe assembly;
- Fig. 2: of the drawing is a longitudinal cross-sectional view of a second embodiment of a plastic cover protected pipe assembly in a compressive-force-relief section of said pipe assembly;
- Fig. 3: of the drawing is a longitudinal cross-sectional view of a third embodiment of a plastic cover protected pipe assembly in a compressive-force-relief section of said pipe assembly; and
- Fig. 4: of the drawing is a longitudinal cross-sectional view of a fourth embodiment of a plastic cover protected pipe assembly in a compressive-force-relief section of said pipe assembly.

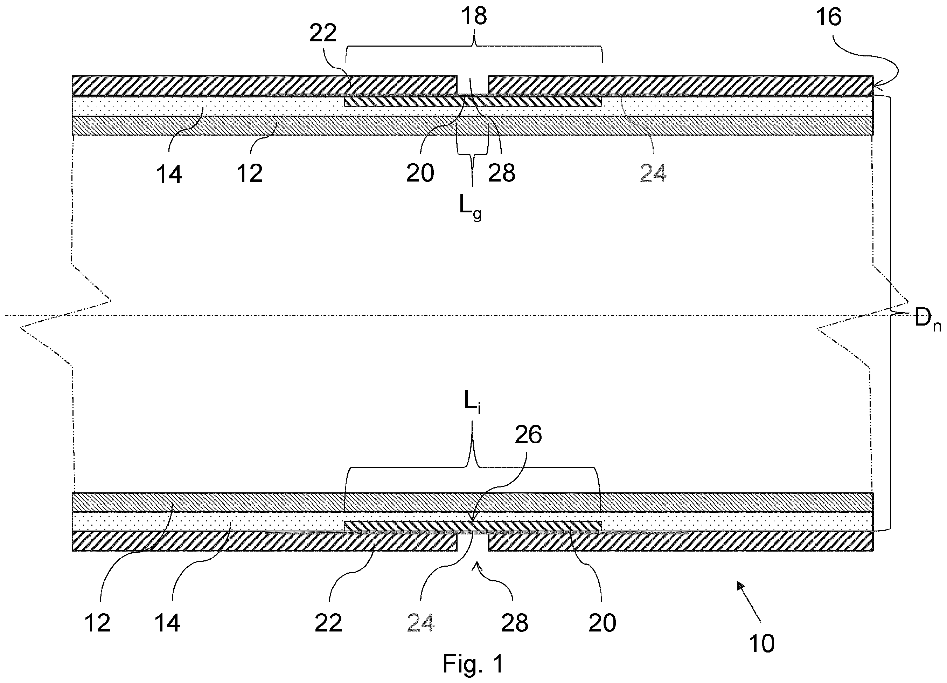

The pipe assembly 10 shown in Fig. 1 comprises a metal pipe 12 that is enclosed by a plastic sheath 14. The plastic sheath 14 preferably is a thermoplastic sheath, for instance a plastic sheath made of Polyethylene (PE) or Polyurethane (PO). The thermoplastic sheath 14 is enclosed by a fibre reinforced protective sheath 16. As already known from the prior art, the fibre reinforced protective sheath preferably is made from a thermoset resin, for instance vinyl ester resin, polyester resin or epoxy resin, and reinforcing fibres embedded therein. Reinforcing fibres preferably are glass-fibres. The glass-fibres may be provided as glass mat, glass cloth (textile glass) or glass rovings. Preferably, the glass-fibres are wound around the plastic sheath in two different winding directions, thus forming at least one right-handed helix and one left-handed helix. The fibre reinforced protective sheath 16 may comprise several layers of reinforcing fibres as, for instance, described in WO 2020/002660 A1 or US 2023/0052636 A1.

To allow bending of a plastic covered protected metal pipe assembly - for instance for laying the pipe in a curved trench - at least or in compressive-force-relief section 18 is provided.

As is shown in Fig.1, in the compressive-force-relief section 18 two layers of fibre reinforced protective sheaths are provided, an inner layer 20 of the fibre reinforced protective sheath 16 and an outer layer 22 of the fibre reinforced protective sheath, wherein the inner layer 20 and the outer layer 22 of the fibre reinforced protective sheath 16 are separated by an intermediate layer 24 that prevents bonding between the inner layer 20 and the outer layer 22 of the fibre reinforced protective sheath 16 in the compressive-force-relief section 18. In the preferred embodiment as shown in Fig.1, the inner layer 20 of the fibre reinforced protective sheath is arranged within an annular groove 26 that is formed in the thermoplastic sheath 14. The outer diameter of the inner layer 20 of the fibre reinforced protective sheath 16 thus corresponds to the nominal maximum outer diameter Dₙ of the thermoplastic sheath 14.

The separating intermediate layer 24 covers the inner layer 20 of the fibre reinforced protective sheath 16 on the outside of the inner layer 20.

The outer layer 22 of the fibre reinforced protective sheath 16 is applied to the outside of the thermoplastic sheath 14 and of the separating intermediate layer 24.

In the region of the compressive-force-relief section 18, the outer layer 22 of the fibre reinforced protective sheath is interrupted by an annular gap 28 that is ranged between two longitudinal sections of the outer layer 22 of the fibre reinforced protective sheath 16.

As can be seen in Fig. 1, the inner layer 20 of the fibre reinforced protective sheath 16 and the two longitudinal sections of the outer layer 22 of the fibre reinforced protective sheath are overlapping in the compressive-force-relief section 18 thus providing a full mechanical protection of the plastic covered protected metal pipe assembly 10 even in the compressive-force-relief section 18.

The separating intermediate layer 24 and the annular gap 28 allows for relative movement between the inner layer 20 and the outer layer 22 of the fibre reinforced protective sheath in the compressive-force-relief section 18. This movements prevents damages of the fibre reinforced protective sheath 16 during bending that could be caused on the inner side of the bending where the fibre reinforced protective sheath typically would be compressed.

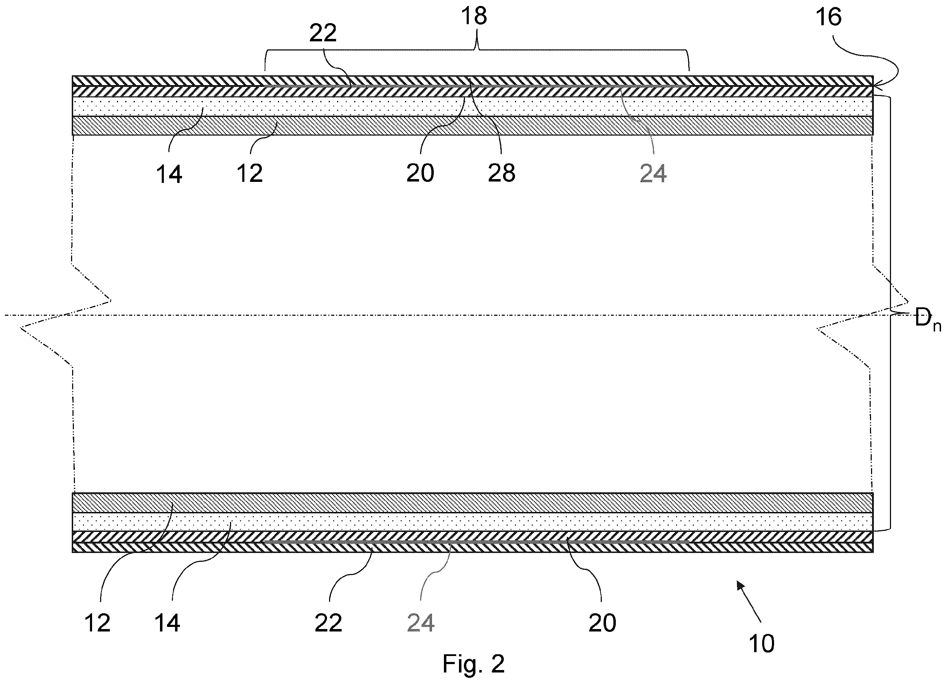

In the embodiment shown in figure 2 no gap is provided. The pipe assembly 10' is designed to promote controlled cracking at dedicated locations or sections of the pipe assembly 10'. This can for instance be achieved by a separating intermediate layer 24 laminated between the inner layer 20 und the outer layer 22 of the of the fibre reinforced protective sheath.

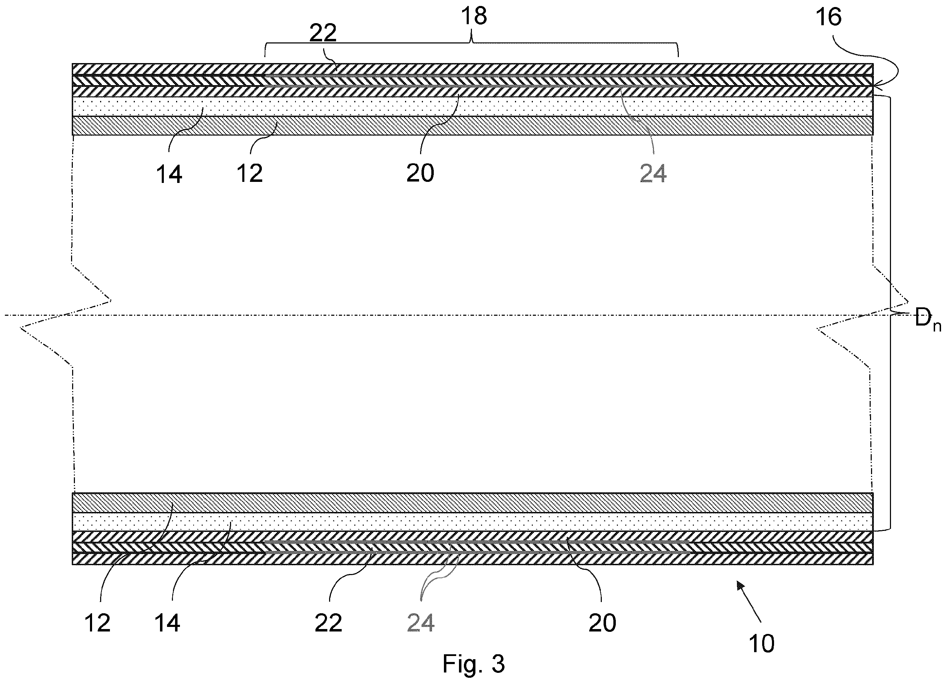

As shown in figure 3, the of the fibre reinforced protective sheath 16 may be comprised of more than two layers separated by a separating intermediate layer 24.

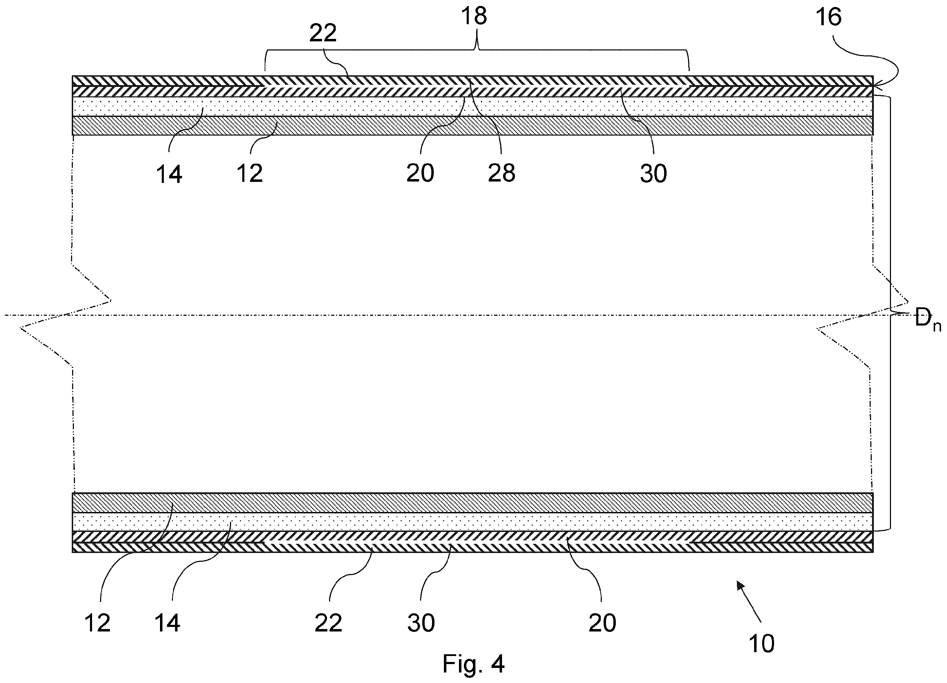

In just another alternative embodiment, that can be combined with the other embodiments, a compressive-force-relief section 18 is implemented by providing a section of the fibre reinforced protective sheath 16 that is weakened, for instance due to less reinforcing fibres, a lack of resin or a delamination; see figure 4.

The pipe assembly 10 may have several compressive-force-relief sections 18 spaced along the length of the pipe assembly 10.

### Reference Numerals:

- 10: plastic covered protected metal pipe assembly
- 12: metal pipe
- 14: plastic sheath, thermoplastic sheath
- 16: fibre reinforced protective sheath
- 18: compressive-force-relief section
- 20: inner layer of the fibre reinforced protective sheath
- 22: outer layer of the fibre reinforced protective sheath
- 24: bonding preventive intermediate layer, separation layer (for instance foil or wax)
- 26: annular groove formed in the plastic sheath
- 28: annular gap interrupting the outer layer of the fibre reinforced protective sheath
- 30: weakened section, for instance due to delamination
- Lᵢ: longitudinal extension of the inner layer of the fibre reinforced protective sheath (inner layer length)
- L_{g}: longitudinal extension of the gap (gap length)
- Dₙ: nominal outer diameter of the thermoplastic sheathing

## Claims

1. Plastic covered protected metal pipe assembly (10) comprising a metal pipe (12) that is covered with a thermoplastic sheath (14) and a fibre-reinforced protective sheath (16) enclosing the thermoplastic sheath, wherein the fibre-reinforced protective sheath comprises reinforcing fibers embedded in a thermoset plastic material,
**characterized in that** the plastic covered protected metal pipe comprises at least one longitudinal section (18) wherein the fibre-reinforced protective sheath comprises at least two layers of fibre reinforced plastic that are separated by an intermediate layer (24) radially disposed between two layers of fibre reinforced plastic (20, 22), said intermediate layer being made of a material that prevents chemical bonding between the two layers of fibre reinforced plastic.

2. Plastic covered protected metal pipe assembly according to claim 1, wherein each of the at least two layers of fibre reinforced plastic (20, 22) may comprise one or more layers of reinforcing fibers.

3. Plastic covered protected metal pipe assembly according to claim 1 or 2, wherein the intermediate layer (24) is made from a plastic foil, preferably from a plastic foil containing polyolefin, Polytetrafluoroethylene, Poly-amid (for instance Nylon) Polyethylene Terephthalate (PET), Polymethylpentene (PMP), Polyvinyl fluoride (PVF), Fluorinated ethylene propylene (FEP), Polytetra-fluoroethylene (PTFE), Ethylene tetrafluoroethylene (ETFE) or Polyimide.

4. Plastic covered protected metal pipe assembly according to at least one of claims 1 to 3, wherein an inner layer (20) of the at least two layers of fibre reinforced plastic is embedded in the plastic sheath enclosing the metal pipe.

5. Plastic covered protected metal pipe assembly according to claim 4, wherein the plastic sheath (14) comprises longitudinal sections with reduced thickness compared to the nominal maximum thickness of the plastic sheath, thus forming an annular groove (26) in the plastic sheath that is filled with the inner layer of the at least two layers of fibre reinforced plastic and that is covered by the intermediate layer.

6. Plastic covered protected metal pipe assembly according to claim 5, wherein at least one outer layer (22) of the at least two layers of fibre reinforced plastic completely encloses the thermoplastic sheath in those longitudinal pipe sections where the thermoplastic sheath has its nominal maximum thickness and partly covers the inner layer of the at least two layers of fibre reinforced plastic.

7. Plastic covered protected metal pipe assembly according to claim 6, wherein the at least one outer layer (22) of the at least two layers of fibre reinforced plastic is interrupted by an annular gap (28), said gap being arranged between two longitudinal sections of the outer layer of the at least two layers of fibre reinforced plastic.

8. Plastic covered protected metal pipe assembly according to claim 7, wherein the annular gap (28) has a gap length (L_{g}) - i.e. an extension in the longitudinal direction of the pipe - that is shorter than an inner layer length (Lᵢ) - i.e. a longitudinal extension of the inner layer of the at least two layers of fibre reinforced plastic.

9. Plastic covered protected metal pipe assembly according to claim 7 or 8, wherein the gap (28) is arranged so as to provide an overlap between the at least one outer layer of the at least two layers of fibre reinforced plastic and the inner layer of the at least two layers of fibre reinforced plastic at both longitudinal end sections of the inner layer of the two layers of fibre reinforced plastic.

10. Plastic covered protected metal pipe assembly according to at least one of claims 1 to 9, wherein the length of a longitudinal section of the at least one outer layer of the at least two layers of fibre reinforced plastic is at least ten to hundred times longer than the inner layer length.

11. Plastic covered protected metal pipe assembly according to at least one of claims 1 to 10, wherein the length of the intermediate layer is longer than the inner layer length so as to allow an overlap with the plastic sheath outside the groove in the plastic sheath in the longitudinal direction of the pipe.

12. Plastic covered protected metal pipe assembly according to at least one of claims 1 to 11, wherein the at least one outer layer of the at least two layers of fibre reinforced plastic preferably is directly applied to the plastic sheath and the intermediate layer, respectively.

13. Plastic covered protected metal pipe assembly according to at least one of claims 1 to 12, wherein the intermediate layer (24) is configures to prevent the transmission of shearing forces between at least two layers of fibre reinforced plastic (20, 22) that would exceed the tensile strength of the thermoset plastic material of the two layers of fibre reinforced plastic.

14. Plastic covered protected metal pipe assembly (10) comprising a metal pipe (10) that is covered with a thermoplastic sheath (14) and a fibre-reinforced protective sheath (16) enclosing the thermoplastic sheath, wherein the fibre-reinforced protective sheath comprises reinforcing fibres embedded in a thermoset plastic material,
**characterized in that** the plastic covered protected metal pipe comprises at least one longitudinal section wherein the fibre-reinforced protective sheath is weakened due to less reinforcing fibres, a lack of resin or a delamination to allow controlled cracking in response to compressive forces.

15. Plastic covered protected metal pipe assembly according to claim 14, wherein the fibre-reinforced protective sheath (16) comprises at least two layers (20, 22) of fibre reinforced plastic that are separated by an intermediate layer (24) radially disposed between the at least two layers of fibre reinforced plastic, said intermediate layer being made of a material that prevents chemical bonding between the two layers of fibre reinforced plastic.

## Patentansprüche

1. Kunststoffummantelte geschützte Metallrohranordnung (10), umfassend ein Metallrohr (12), das mit einer thermoplastischen Ummantelung (14) und einer faserverstärkten Schutzummantelung (16) umgeben ist, die die thermoplastische Ummantelung umschließt, wobei die faserverstärkte Schutzummantelung Verstärkungsfasern umfasst, die in ein duroplastisches Kunststoffmaterial eingebettet sind,
**dadurch gekennzeichnet, dass** das kunststoffummantelte geschützte Metallrohr mindestens einen Längsabschnitt (18) umfasst, wobei die faserverstärkte Schutzummantelung mindestens zwei Schichten aus faserverstärktem Kunststoff umfasst, die durch eine Zwischenschicht (24) getrennt sind, die radial zwischen zwei Schichten aus faserverstärktem Kunststoff (20, 22) angeordnet ist, wobei die Zwischenschicht aus einem Material besteht, das eine chemische Bindung zwischen den beiden Schichten aus faserverstärktem Kunststoff verhindert.

2. Kunststoffummantelte geschützte Metallrohranordnung nach Anspruch 1, wobei jede der mindestens zwei Schichten aus faserverstärktem Kunststoff (20, 22) eine oder mehrere Schichten aus Verstärkungsfasern umfassen kann.

3. Kunststoffummantelte geschützte Metallrohranordnung nach Anspruch 1 oder 2, wobei die Zwischenschicht (24) aus einer Kunststofffolie gemacht ist, vorzugsweise aus einer Kunststofffolie, die Polyolefin, Polytetrafluorethylen, Polyamid (z. B. Nylon), Polyethylenterephthalat (PET), Polymethylpenten (PMP), Polyvinylfluorid (PVF), fluoriertes Ethylenpropylen (FEP), Polytetrafluorethylen (PTFE), Ethylentetrafluorethylen (ETFE) oder Polyimid enthält.

4. Kunststoffummantelte geschützte Metallrohranordnung gemäß mindestens einem der Ansprüche 1 bis 3, wobei eine innere Schicht (20) der mindestens zwei Schichten aus faserverstärktem Kunststoff in die das Metallrohr umgebende Kunststoffummantelung eingebettet ist.

5. Kunststoffummantelte geschützte Metallrohranordnung nach Anspruch 4, wobei die Kunststoffummantelung (14) Längsabschnitte mit einer im Vergleich zur nominalen maximalen Dicke der Kunststoffummantelung reduzierten Dicke aufweist, wodurch eine ringförmige Nut (26) in der Kunststoffummantelung gebildet ist, die mit der inneren Schicht der mindestens zwei Schichten aus faserverstärktem Kunststoff gefüllt und von der Zwischenschicht bedeckt ist.

6. Kunststoffummantelte geschützte Metallrohranordnung nach Anspruch 5, wobei mindestens eine äußere Schicht (22) der mindestens zwei Schichten aus faserverstärktem Kunststoff die thermoplastische Ummantelung in den Längsabschnitten des Rohrs, in denen die thermoplastische Ummantelung ihre nominale Maximaldicke aufweist, vollständig umschließt und die innere Schicht der mindestens zwei Schichten aus faserverstärktem Kunststoff teilweise bedeckt.

7. Kunststoffummantelte geschützte Metallrohranordnung nach Anspruch 6, wobei die mindestens eine äußere Schicht (22) der mindestens zwei Schichten aus faserverstärktem Kunststoff durch eine ringförmige Lücke (28) unterbrochen ist, die zwischen zwei Längsabschnitten der äußeren Schicht der mindestens zwei Schichten aus faserverstärktem Kunststoff angeordnet ist.

8. Kunststoffummantelte geschützte Metallrohranordnung nach Anspruch 7, wobei die ringförmige Lücke (28) eine Lückenlänge (L_{g}) - d. h. eine Ausdehnung in Längsrichtung des Rohrs - aufweist, die kürzer ist als eine Länge (Lᵢ ) der inneren Schicht - d. h. eine Längsausdehnung der inneren Schicht der mindestens zwei Schichten aus faserverstärktem Kunststoff.

9. Kunststoffummantelte geschützte Metallrohranordnung nach Anspruch 7 oder 8, wobei die Lücke (28) so angeordnet ist, dass sich eine Überlappung zwischen der mindestens einen äußeren Schicht der mindestens zwei Schichten aus faserverstärktem Kunststoff und der inneren Schicht der mindestens zwei Schichten aus faserverstärktem Kunststoff an beiden Längsenden der inneren Schicht der zwei Schichten aus faserverstärktem Kunststoff bildet.

10. Kunststoffummantelte geschützte Metallrohranordnung nach mindestens einem der Ansprüche 1 bis 9, wobei die Länge eines Längsabschnitts der mindestens einen äußeren Schicht der mindestens zwei Schichten aus faserverstärktem Kunststoff mindestens zehn- bis hundertmal länger ist als die Länge der inneren Schicht.

11. Kunststoffummantelte geschützte Metallrohranordnung gemäß mindestens einem der Ansprüche 1 bis 10, wobei die Länge der Zwischenschicht länger ist als die Länge der inneren Schicht, um eine Überlappung mit der Kunststoffummantelung außerhalb der Nut in der Kunststoffummantelung in Längsrichtung des Rohrs zu ermöglichen.

12. Kunststoffummantelte geschützte Metallrohranordnung gemäß mindestens einem der Ansprüche 1 bis 11, wobei die mindestens eine äußere Schicht der mindestens zwei Schichten aus faserverstärktem Kunststoff vorzugsweise direkt auf die Kunststoffummantelung bzw. die Zwischenschicht aufgebracht ist.

13. Kunststoffummantelte geschützte Metallrohranordnung gemäß mindestens einem der Ansprüche 1 bis 12, wobei die Zwischenschicht (24) so konfiguriert ist, dass sie die Übertragung von Scherkräften zwischen mindestens zwei Schichten aus faserverstärktem Kunststoff (20, 22) verhindert, die die Zugfestigkeit des duroplastischen Kunststoffmaterials der beiden Schichten aus faserverstärktem Kunststoff überschreiten würden.

14. Kunststoffummantelte geschützte Metallrohranordnung (10) mit einem Metallrohr (10), das mit einer thermoplastischen Ummantelung (14) und einer faserverstärkten Schutzummantelung (16) umgeben ist, die die thermoplastische Ummantelung umschließt, wobei die faserverstärkte Schutzummantelung Verstärkungsfasern umfasst, die in ein duroplastisches Kunststoffmaterial eingebettet sind,
**dadurch gekennzeichnet, dass** das kunststoffummantelte geschützte Metallrohr mindestens einen Längsabschnitt umfasst, in dem die faserverstärkte Schutzummantelung aufgrund weniger Verstärkungsfasern, eines Mangels an Harz oder einer Delaminierung geschwächt ist, um ein kontrolliertes Reißen als Reaktion auf Druckkräfte zu ermöglichen.

15. Kunststoffummantelte geschützte Metallrohranordnung nach Anspruch 14, wobei die faserverstärkte Schutzummantelung (16) mindestens zwei Schichten (20, 22) aus faserverstärktem Kunststoff umfasst, die durch eine Zwischenschicht (24) getrennt sind, die radial zwischen den mindestens zwei Schichten aus faserverstärktem Kunststoff angeordnet ist, wobei die Zwischenschicht aus einem Material besteht, das eine chemische Bindung zwischen den beiden Schichten aus faserverstärktem Kunststoff verhindert.

## Revendications

1. Ensemble (10) à tuyau métallique protégé et revêtu de matière plastique comprenant un tuyau (12) métallique, qui est revêtu d'une gaine (14) thermoplastique et d'une gaine (16) protectrice renforcée par de la fibre entourant la gaine thermoplastique, dans lequel la gaine protectrice renforcée par de la fibre comprend des fibres de renfort incorporées dans une matière plastique thermodurcissable, **caractérisé en ce que** le tuyau métallique protégé et revêtu de matière plastique comprend au moins un tronçon (18) longitudinal, dans lequel la gaine protectrice renforcée par de la fibre comprend au moins deux couches de matière plastique renforcée par de la fibre, qui sont séparées par une couche (24) intermédiaire disposée radialement entre deux couches de matière plastique (20, 22) renforcée par de la fibre, ladite couche intermédiaire étant en une matière, qui empêche une liaison chimique entre les deux couches de matière plastique renforcée par de la fibre.

2. Ensemble à tuyau métallique protégé et revêtu de matière plastique suivant la revendication 1, dans lequel chacune des au moins deux couches de matière plastique (20, 22) renforcée par de la fibre peut comprendre une ou plusieurs couches de fibre de renfort.

3. Ensemble à tuyau métallique protégé et revêtu de matière plastique suivant la revendication 1 ou 2, dans lequel la couche (24) intermédiaire est en une feuille de matière plastique, de préférence en une feuille de matière plastique contenant une polyoléfine, du polytétrafluoroéthylène, un polyamide (par exemple du nylon), du poly(téréphtalate d'éthylène) (PEP), du polyméthylpentène (PMP), du poly(fluorure de vinyle) (PVF), de l'éthylène propylène fluoré (FEP), du polytétrafluoroéthylène (PTFE), de l'éthylène tétrafluoroéthylène (ETFE) ou du polyimide.

4. Ensemble à tuyau métallique protégé et revêtu de matière plastique suivant au moins l'une des revendications 1 à 3, dans lequel une couche (20) intérieure des au moins deux couches de matière plastique renforcée par de la fibre est incorporée dans la gaine en matière plastique entourant le tuyau métallique.

5. Ensemble à tuyau métallique protégé et revêtu de matière plastique suivant la revendication 4, dans lequel la gaine (14) en matière plastique comprend des tronçons longitudinaux d'épaisseur réduite par rapport à l'épaisseur nominale maximum de la gaine en matière plastique, en formant ainsi une rainure (26) annulaire dans la gaine en matière plastique, qui est remplie de la couche intérieure des au moins deux couches de matière plastique renforcée par de la fibre et qui est revêtue de la couche intermédiaire.

6. Ensemble à tuyau métallique protégé et revêtu de matière plastique suivant la revendication 5, dans lequel au moins une couche (22) extérieure des au moins deux couches de matière plastique renforcée par de la fibre entoure complètement la gaine en matière thermoplastique dans les tronçons longitudinaux de tuyau où la gaine en matière thermoplastique a une épaisseur nominale maximum et recouvre en partie la couche intérieure des au moins deux couches de matière plastique renforcée par de la fibre.

7. Ensemble à tuyau métallique protégé et revêtu de matière plastique suivant la revendication 6, dans lequel la au moins une couche (22) extérieure des au moins deux couches de matière plastique renforcée par de la fibre est interrompue par un intervalle (28) annulaire,
ledit intervalle étant disposé entre deux tronçons longitudinaux de la couche extérieure des au moins deux couches de matière plastique renforcée par de la fibre.

8. Ensemble à tuyau métallique protégé et revêtu de matière plastique suivant la revendication 7, dans lequel l'intervalle (28) annulaire a une longueur (L_{g}) d'intervalle,
- c'est-à-dire une étendue dans la direction longitudinale du tuyau - qui est plus courte qu'une longueur (Lᵢ) de couche intérieure
- c'est-à-dire une étendue longitudinale de la couche intérieure des au moins deux couches de la matière plastique renforcée par de la fibre.

9. Ensemble à tuyau métallique protégé et revêtu de matière plastique suivant la revendication 7 ou 8, dans lequel l'intervalle (28) est disposé, de manière à donner un chevauchement, entre la au moins une couche extérieure des au moins deux couches de matière plastique renforcée par de la fibre et la couche intérieure des au moins deux couches de matière renforcée par de la fibre, aux deux tronçons longitudinaux d'extrémité de la couche intérieure des deux couches de matière plastique renforcée par de la fibre.

10. Ensemble à tuyau métallique protégé et revêtu de matière plastique suivant au moins l'une des revendications 1 à 9, dans lequel la longueur d'un tronçon longitudinal de la au moins une couche extérieure des au moins deux couches de matière plastique renforcée par de la fibre est au moins de dix à cent fois plus grande que la longueur de la couche intérieure.

11. Ensemble à tuyau métallique protégé et revêtu de matière plastique suivant au moins l'une des revendications 1 à 10, dans lequel la longueur de la couche intermédiaire est plus grande que la longueur de la couche intérieure, de manière à permettre un chevauchement avec la gaine en matière plastique à l'extérieur de la rainure dans la gaine en matière plastique dans la direction longitudinale du tuyau.

12. Ensemble à tuyau métallique protégé et revêtu de matière plastique suivant au moins l'une des revendications 1 à 11, dans lequel la au moins une couche extérieure des au moins deux couches de matière plastique renforcée par de la fibre est appliquée de préférence directement à la gaine en matière plastique et à la couche intermédiaire respectivement.

13. Ensemble à tuyau métallique protégé et revêtu de matière plastique suivant au moins l'une des revendications 1 à 12, dans lequel la couche (24) intermédiaire est configurée pour empêcher la transmission de force de cisaillement entre au moins deux couches de matière plastique (20, 22) renforcée par de la fibre, qui dépasserait la résistance à la traction de la matière plastique thermodurcissable des deux couches de matière plastique renforcée par de la fibre.

14. Ensemble (10) à tuyau métallique protégé et revêtu de matière plastique comprenant un tuyau (10) métallique, qui est revêtu d'une gaine (14) thermoplastique et d'une gaine (16) protectrice renforcée par de la fibre entourant la gaine thermoplastique, dans lequel la gaine protectrice renforcée par de la fibre comprend des fibres de renfort incorporées dans une matière plastique thermodurcissable, **caractérisé en ce que** le tuyau métallique protégé et revêtu de matière plastique comprend au moins un tronçon longitudinal, dans lequel la gaine protectrice renforcée par de la fibre est affaiblie en raison de moins de fibres de renfort, d'un vernis de résine ou d'une délamination pour permettre une fissuration contrôlée en réaction à des forces de compression.

15. Ensemble à tuyau métallique protégé et revêtu de matière plastique suivant la revendication 14, dans lequel la gaine (16) protectrice renforcée par de la fibre comprend au moins deux couches (20, 22) de matière plastique renforcée par de la fibre, qui sont séparées par une couche (24) intermédiaire disposée radialement entre les au moins deux couches de matière plastique renforcée par de la fibre, ladite couche intermédiaire étant en une matière, qui empêche une liaison chimique entre les deux couches de matière plastique renforcée par de la fibre.
